# EUROPEAN PATENT APPLICATION

(11) **EP 3 251 501 A1**
(43) Date of publication of application: **06.12.2017**
(21) Application number: 16171940.6
(22) Date of filing: 30.05.2016
(51) Int. Cl.: A01K 5/01, A01K 5/02

(54) **FEEDING SYSTEM FOR REMOTELY CONTROLLABLE DISPENSING OF NUTRIENTS, FEEDING METHOD AND COMPUTER PROGRAM**

(71) Applicant: Franciosi, Andre Santos, 8152 Zürich (CH)
(72) Inventor: Franciosi, Andre Santos, 8152 Zürich (CH)
(74) Representative: Seliger, Knut

(57) **Abstract**

A feeding system (10) for remotely controllable dispensing of nutrients (46) for a living being, in particular for an animal, is provided. The feeding system (10) comprises a nutrients dispensing means (30), a control device for controlling and/ or monitoring the dispensing of nutrients (46) and/ or the living being and a storage container (44) for nutrients (46) with a storage sensing device (42) as a part of the control device. The control device is connected or connectable to a data transmission network, in particular to the internet, so that a user can remotely control the dispensing of nutrients (46) and/ or monitor the living being and/ or the remaining nutrients (46) by means of the control device and the data transmission network.

## Description

The invention relates to a feeding system for remotely controllable dispensing of nutrients for a living being, in particular for an animal, a feeding method for remotely controllable dispensing of nutrients for a living being, in particular for an animal, and a computer program. Through digitalization and worldwide data traffic, the remote feeding of living beings, including monitoring and controlling of the feeding process, has become possible. Particularly, the feeding and watering of pets with internet-based control and monitoring devices have become affordable.
Pet feeding devices with an internet connection for controlling an automatic supply of feeds are known. These devices may also be adapted to remotely monitor the pets, as described in US 2004/0194714 A1. The presented system is connected to a computer so the user is able to control an automatic opening/ closing door which supplies feeds from a tank into a feeds tub. This device is also adapted for monitoring the pet via images taken by a PC camera or a digital camcorder that can be transmitted to a remote system via internet. Direct human interaction is needed to monitor the stored amounts of feeds and/ or water to decide whether to refill the feeds tank.
It is furthermore known that remotely-controlled pet feeding devices can comprise feeds and water containers from which desired amounts can be dispensed, as described in US 2007/0295277 A1. This device also enables communication with the pet by an image shooter, a display, a microphone unit and a speaker.
US 2014/0090601 A1 discloses a programmable pet feeding apparatus with feeds compartments that can be made accessible by rotating a feeding turntable under a suitable housing aperture. The apparatus is adapted for internet communication and remote controlling. Besides, the amount of feeds remaining in the open feeds compartment can be monitored with a camera. Only a limited number of compartments is available.

The problem to be solved by the invention is to provide a pet feeding system which can be remotely controlled in a most flexible way and which is able to maintain the vital functions of the pet.
A first aspect of the invention is a feeding system for remotely controllable dispensing of nutrients for a living being, in particular for an animal, comprising a nutrients dispensing means, a control device for controlling and/ or monitoring the dispensing of nutrients and/ or the living being and a storage container for nutrients with a storage sensing device as a part of the control device. The control device is connected or connectable to a data transmission network, in particular to the internet, so that a user can remotely control the dispensing of nutrients and/ or monitor the living being and/ or the remaining nutrients by means of the control device and the data transmission network.
The term living being particularly refers to animals, such as pets, but also plants can be supplied with nutrients by the present invention. Particularly, cats and dogs can be fed and watered with the presented feeding system.
The nutrient dispensing means is particularly a dosing unit suitable to dispense an exactly specified desired amount of the respective nutrient. Preferably, the exact amounts to be dispensed can be chosen in grams and milliliters, respectively.
Nutrients, in the context of the invention, may be particularly solid, paste-like or liquid mixtures of nutrients such as animal feeds and/ or beverages, such as water. In these mixtures, active pharmaceutical substances and/ or feed supplements may be included.

The control device, particularly an electronic control device comprising a central processing unit, may comprise an optical sensor, e.g. in a camera, to enable optical monitoring of the pet and/ or the feeding system and/ or its surrounding by transmission of image data. Besides, it may comprise an acoustic sensor, particularly a microphone. The control device preferably comprises a communication device, which is suitable to establish a connection to a data transmission network, particularly to the internet. The data connection may particularly be realized by a Wi-Fi connection. The control device is particularly compatible to all existing internet network protocols, e.g. Wireless Equivalent Privacy (WEP), Wireless Application Protocol (WAP), Wireless Application Protocol 2 (WAP2), Wi-Fi Protected Setup (WPS), and non-secure systems. Moreover, the internet connection may be compatible to Institute of Electrical and Electronics Engineers 802.11 Wireless Local Area Network (IEEE 802.11 WLAN) systems.
Besides, the control device may comprise a microphone and/ or loudspeakers that enable remote communication with the pet.
Particularly, all settings and parameters can be monitored and controlled via internet. For this purpose, input and output can be realized e.g. by a web-browser and/ or a computer program, such as an app. Computers, Laptop computers, handheld devices such as telephones, smartphones, tablets or the like.
Particularly, the exact time of the feeds and/ or water dispensing can be chosen. Dosing amounts and dosing times can be preset or programmed in advanced. Alternatively, dosing can be initiated instantly by a suitable remote signal.
Particularly, all data are stored in a non-volatile memory to prevent from data loss in case of a power failure. The control device may be suitable to automatically restart, is necessary, self-configure and reconnect to a data transmission network, e.g. a Wi-Fi network, after a power failure.

The storage containers are designed in a manner that allows different types of feeds to flow down easily to be dispensed. Feeds and/ or water pots may be installed below the dispensing units to allow for reception of the dispensed amounts. These pots may be part of the feeding system and shaped in a way that feeds and water are kept always in the center of the pot, allowing the pet enough space to eat and drink and allowing the camera to monitor the amount of feeds and water in the pots.
Besides the storage container, the supply of nutrients may also be realized through a connection to a supply system, particularly by a tube or pipeline connected to a supply network, e.g. in the case of water.
Particularly, the feeding system comprises one water reservoir and one feeds storage container. Alternatively, it may comprise one feeds storage container and one connection to the water supply network.
In a favorable embodiment, the feeding system is adapted to dispense solid and/ or paste-like feeds and/ or liquids, particularly water.
In a further embodiment, the control device of the feeding system is adapted to send information about the amount of nutrients consumed and/ or about the remaining amount of nutrients.
The user can remotely control and/ or monitor the dispensing of nutrients. Particularly, the user can receive these data via a device connected to the internet, such as a smartphone or a tablet to remotely monitor the dispensing and/ or the storage levels.
Particularly, the user can freely select the desired amount of feeds and/ or water to be dispensed. Besides, the user can remotely monitor the pet and/ or the remaining amount of nutrients. Particularly, the feeding system may be realized in a manner that allows the user to manually calibrate the amount of feeds and water based on the feeds shape and weight and on the input water pressure.
In another embodiment, the control device comprises an internal embedded web server. The control device particularly comprises an internal embedded web server for the transmission and/ or reception of data which can be received by and/ or transmitted to a remote, web-enabled device, particularly with the use of a web browser or app. A Wi-Fi adaptor, being part of the control device, may enable the embedded web-server to connect to the internet. Particularly, the web server is suitable to establish a network connection compliant to the Hypertext Transfer Protocol 2 and/ or the Multi Protocol File System 2 standard. All electronic devices that are part of the control system are particularly controlled by a central processing unit (CPU).
Additionally, a remote user notification compliant to the Simple Mail Transfer Protocol standard can be configured. Particularly, the control device is suitable to send e-mail notifications, e.g. in case of a successful dispensing procedure, a failure or exception of any kind, e.g. a power failure, or a low feeds and/ or water level in the respective storage container. Particularly, all e-mail options can be configured by the user, allowing the user to choose when and what kind of emails they would like to receive.
The embedded web server can be easily and securely accessed by entering a username and password, which can be set and changed, into the assigned web-page. This also protects against misuse of other people who should not access and/ or control the device.

In another embodiment, the nutrients dispensing means is realized as screw conveyor. Particularly, the screw conveyor is driven by an electric motor. Both the motor and the screw conveyer may be positioned on a dispensing unit that also comprises a gear box. Particularly, this dispensing unit is removable and waterproof, so the user can remove and clean it in a safe and easy way.
Preferably, the feeding system is installed in an entirely waterproof case which enables outdoor and indoor use. The case is preferably made of a robust material to prevent destruction by the pet. The system's mass center is preferably low in order to achieve a stable positioning without the danger of an accidental tilting or falling over. It may furthermore contain external support elements to attach it to a wall.

In a further embodiment, the control device comprises a camera and/ or at least one sensor. The user is allowed to monitor the living being, the dispensing process and/ or the remaining nutrients with the camera. In particular, colored images can be taken and sent via the data transmission network. The user can receive these images with any device connected to the internet.
Particularly, the lens of the camera is designed and positioned in a manner that allows for monitoring the pet, its surroundings and the remaining feeds and/ or water in the pots.
The camera is particularly positioned in a manner that allows for visual monitoring of the pots so that the user can decide whether to remotely initiate a dispensing process and/ or the amount to be dispensed based on the feeds and/ or water level in the pots.
The storage container comprises a storage sensing device, e. g. a load cell or a level sensor, particularly an infrared sensor, which is part of the control device. The user can monitor the remaining nutrients, particularly the remaining amounts of feeds and water, via data gathered by the sensor.

In a further embodiment, the control device comprises a closed-loop control.
Particularly, the dispensing of nutrients is controlled by a closed-loop control for exact and automated dispensing of nutrients. The closed-loop control may be sensorless. In case of a liquid, e.g. water, the closed-loop control may be based on a water flow measurement. Particularly, the dispensing system is suitable to operate independently of the prevailing pressure, which may be either the hydrostatic pressure from the storage container or the line pressure. The advantage is that the supply is very precise and, in case of a connection to a supply network, independent of the prevailing pressure.

In a further embodiment, the storage container comprises a connecting means suitable to establish a connection to a water source.
The storage container may be realized as a reservoir for liquids, particularly water. In this case, a connecting means may be provided to establish a connection to a water source, such as the water supply network or a water reservoir.

In a favorable embodiment, the connecting means comprises a coupling element suitable to establish a sealing contact with a corresponding coupling element.
The coupling element is particularly suitable to establish a sealing contact with a corresponding coupling element, which may e.g. be positioned on a water hose. Such coupling technology may be referred to as non-spill technology. Advantages are that no water is wasted during the refilling, the surrounding of the feeding system stay dry and safe during the refilling and the refilling is easy and comfortable.

In another embodiment, the control device comprises an optical sensor, particularly realized as a camera, suitable to transmit evaluable image data in dark surroundings.
Particularly, the optical sensor is realized as an infrared camera. In this case, an additional infrared emitting device such as an infrared light-emitting diode may be provided. The pet as well as the feeds and water reserve can be monitored at night without disturbing the pet or the surrounding with visible light. Particularly, the camera comprises a light sensor that automatically detects the lack of light and takes infrared pictures in dark environments or in low light environments. The image data is transferred via the data transmission network and the user can monitor the pet with any device connected to the internet.

In another embodiment, the feeding system comprises an electrical storage device, particularly a battery. Particularly, the feeding system also comprises an energy management system for energy consumption reduction.
Particularly, the battery is suitable to supply the feeding system with power. The control device may be suitable to automatically put the battery in operation in case of a power failure. Battery voltage and current may be monitored during charging and discharging cycles.
In a further embodiment, the control device comprises a local input means that allows for entering control data directly into the control device.

The local input means may be realized as a control panel with switches and/ or buttons for turning the feeding system or parts of it on and off and/ or entering control data such as amount of feeds and/ or water to be dispensed in grams and/ or milliliters, dispensing times, internet Wi-Fi Service Set Identifier (SSID) and Wi-Fi password, real-time clock and the feeds and water calibration. Particularly, all input operations such as selection of dispensing times and feeds and/ or water amounts to be dispensed can be realized by means of the local input means. Particularly, all data are synchronized in real time, so all measured data and settings changes are visible both online and locally at the feeding system.
The local input panel is preferably secured by a door. The door of the control panel may comprise a locking system, which keeps the door safely closed in order to avoid that the pet or kids change the settings accidently.

In a further embodiment, the control device comprises a local output means that allows for displaying data at the place of feeding.
The local output means may be realized as a display, particularly a LCD display, which is suitable to show data such as time, dispensing times, dispensing amounts, feeds and/ or water levels, battery loading status, IP address and/ or Wi-Fi connection status.
Particularly, all data such as programmed dispensing times and/ or amounts and remaining feeds and/ or water can be displayed by the local output means.
The display may be adapted to automatically be dimmed or switched off to protect the batteries in case of a power failure in order to reduce power consumption and increase the battery life time. Additionally, other energy-consuming devices may reduce power consumption or be automatically switched off when the system is being supplied by batteries.

A second aspect of the invention is a feeding method for remotely controllable dispensing of nutrients for a living being, in particular for an animal, which comprises providing a feeding system according to the invention, connecting the control device to a data transmission network, in particular to the internet, and remotely controlling the dispensing of nutrients and/ or monitoring the living being and/ or the remaining nutrients by means of the control device and the data transmission network.
In particular, the user can remotely enter a desired amount of nutrients such as pet feeds and/ or water and a desired dispensing time. The dispensing is carried out fully automated. The user can remotely receive information about the amount of nutrients consumed and/ or about the remaining amount of nutrients and/ or about the living being, in particular the pet. The method is particularly suitable to be carried out with the feeding system according to the invention.

A third aspect of the invention is a computer program, particularly app, which can be loaded into the internal memory of a digital computer and which comprises sections of software code that are able to execute functions of the feeding system according to the invention or that are able to execute steps, particularly all steps, of the feeding method according to the invention.

The invention is not limited to the alternatives described herein. Furthermore, all described embodiments and alternatives of the invention may be combined.

The invention is further illustrated and characterized by the following figures that show a certain example from which further embodiments and advantages can be drawn. These figures are meant to illustrate the invention but not to limit its scope.
Figure 1 shows a diagonal view of one embodiment of feeding system,
Figure 2 shows a diagonal view of a detail of the storage container,
Figure 3 shows a partly-exploded diagonal view of the storage container with a magnified detail,
Figure 4 shows a diagonal view of another embodiment of the feeding system,
Figure 5 shows a perspective view of a part of the feeding system,
Figure 6 shows a perspective view of the feeding system from above,
Figure 7 shows a side view of the lower part of the feeding system,
Figure 8 shows a diagonal view of another embodiment of the feeding system,
Figure 9 shows a side view of a local control panel,
Figure 10 shows a diagonal view of a part of the body of the feeding system,
Figure 11 shows the block diagram of a feeding system.

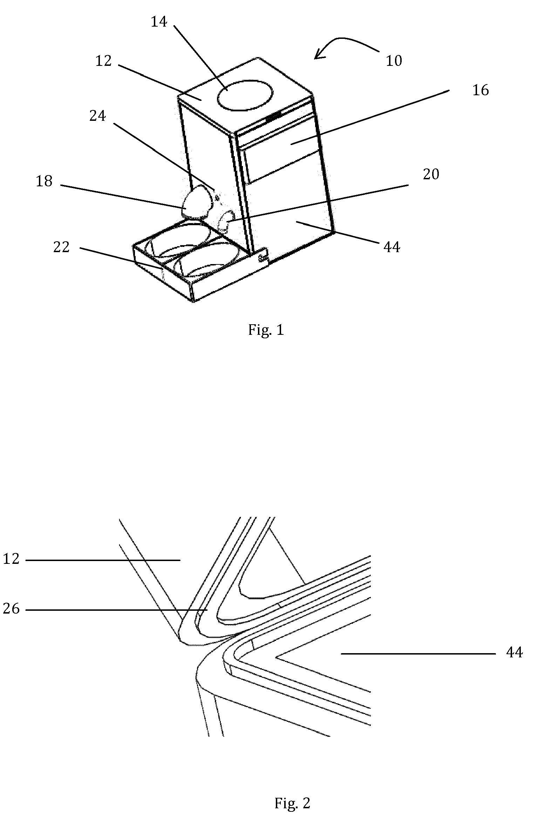

Figure 1 shows a diagonal view of a feeding system 10 with a storage container 44, a feeds output 18 and water output 20. Below the feeds output 18 and the water output 20, feeds and water pots 22 are arranged. The lid 12 of the storage container 44 comprises a transparent part 14, which can be used to control the remaining amount of feeds in the storage container 44 without the need to open the lid. The water which is dispensed through the water output 20 enters the feeding system 10 through a connection to the water supply network. A camera 24 is arranged near the feeds output 18 and the water output 20 to enable the user to monitor the amounts of feeds and water left in the feeds and water pots 22. Additionally, the user can monitor the pet and the surroundings of the feeding system. For this purpose, image data from the camera 24 is transferred by a wireless connection, particularly an internet connection, to a remote device 995 (not shown here) which the user controls.

Figure 2 shows a diagonal view of a detail of the storage container 44 where the lid 12 is partly open, and the rubber seal 26 is visible. The rubber seal 26 avoids that dust or liquid can come into the storage container 44, completely sealing it from the environment. In a similar way, the control panel door 16, the bottom cover, and the dispensing unit 34 are sealed to be waterproof.

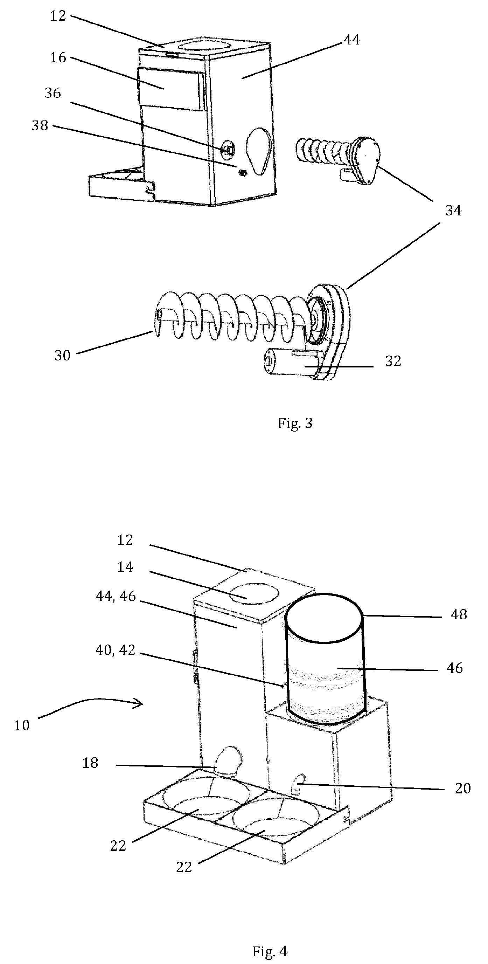

Figure 3 shows a partly-exploded diagonal view of the storage container 44 with a magnified view of the dispensing unit 34. The dispensing unit 34 comprises a nutrient dispensing means 30, which is realized a screw conveyor. Furthermore, it comprises a motor 32 with a gear box. It is realized in a completely waterproof manner, which makes it safe and easy for the user to remove and clean it. In operating mode, the dispensing unit 34 is mounted and sealed within the feeding system 10 and dispenses feeds from the storage container 44 to the feeds output, when requested. The feeding system 10 furthermore comprises an electronic valve 36 and an AC Power Adapter 38. A control panel comprising the local input means 60 and the local output means 70 is arranged behind the door 16, which is also sealed with a rubber seal.

The speed of the dispensing unit 34 is controlled by a sensorless closed-loop control, which enables accurate feeding amounts. In addition, the amount of water is also precisely controlled by an electronic valve 36 and a closed-loop control based on the water flow measurement. The electronic valve can particularly operate for water pressures from 1 bar up to 10 bars. In order to make the given amount of feeds and water even more precise, the user has the option to manually calibrate the given amount of feeds and water depending on the shape and weight of the feeds and on the input water pressure.
In addition to the AC Power 38, the electric supply of the feeding system 10 can be realized by a battery. The battery takes over the energy supply automatically when there is no AC Power available.

Figure 4 shows a diagonal view of another embodiment of the feeding system 10 comprising a storage container 44 and a water reservoir 48. The storage container 44 comprises a lid 12 with a transparent part 14, so the user is able to monitor the remaining amount of feeds without opening the lid. The nutrients 46, particularly pet feeds, are stored within the storage container 44. The nutrient dispensing means 30 (not shown here) transports the feeds through the feeds output 18 into the feeds pot 22. An electronic valve 36 (not shown here) controls the amount of water from the water reservoir 48 being dispensed through the water output 20 into the water pot 22. The water reservoir 48 is particularly removable and possesses a handler for easy removing, cleaning, carrying and installation.

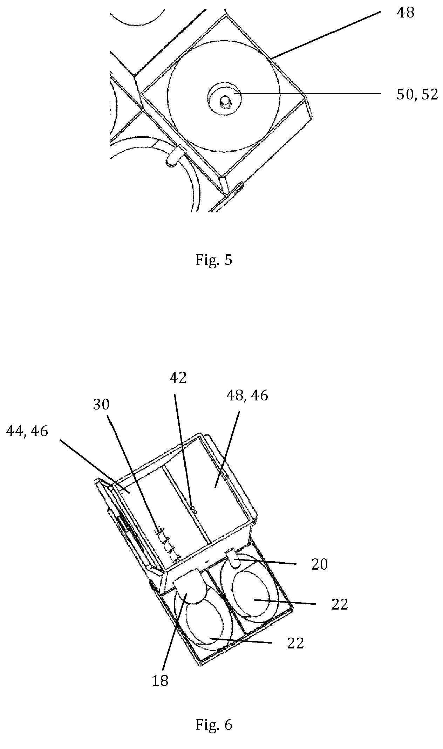

Figure 5 shows a perspective view of the water reservoir 48 and a part of the feeding system 10 from above. On top of the water reservoir 48, a connecting means 50 is arranged, comprising a coupling element 52, which enables refilling of the water reservoir 48 without spilling water. Such coupling technology may be referred to as non-spill technology. This ensures that no water gets lost during the refilling process and that neither the feeding system nor its surroundings get wet. The electronic valve 36 enables the dispensing of water independently of the line pressure or the remaining amount of water in the water reservoir 48. This is achieved with a closed-loop control.

Figure 6 shows a perspective view of a feeding system 10 comprising a water reservoir 48 and a storage container 44 with an open lid 12 from above. The nutrient dispensing means 30, realized as a screw conveyer, is visible at the bottom of the storage container 44. The storage sensing device 42 is arranged in a manner enabling the remote monitoring of remaining nutrients, typically pet feeds and/or water. The water reservoir 48 is preferably transparent, to allow the user to easily check when it's time to refill the water.

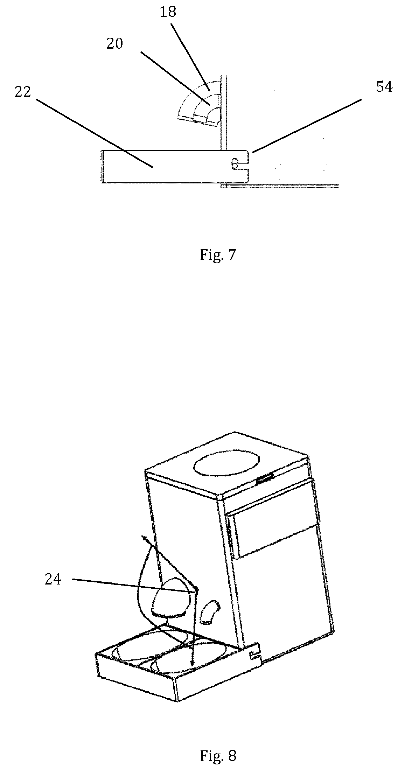

Figure 7 shows a side view of the lower part of the feeding system 10 with the feeds and water pots 22, the feeds output 18 and the water output 20. Feeds and water pots 22 can be easily removed for being cleaned and contain a locking mechanism 54, in order to avoid that the pet takes away the feeds and water pots 22. The locking mechanism 54 is designed in a way that enables the user to easily remove and clean the pots.
It is further visible that the feeds output 18 and the water output 20 are designed in a special angle so that the food and water falls right in the middle of the pots, avoiding that feeds pieces or water drops fall outside the pots.

Figure 8 shows a diagonal view of the feeding system 10 with a camera 24 arranged near the feeds output 18 and the water output 20. The view angle of the camera 24 is shown. It is designed in a way that enables the user to control and see the remaining amount of feeds and water remaining in the pots in order to know the amount that the pet has eaten and drunk. The user is therefore in full control of how much the next meal should provide in terms of feeds and water.

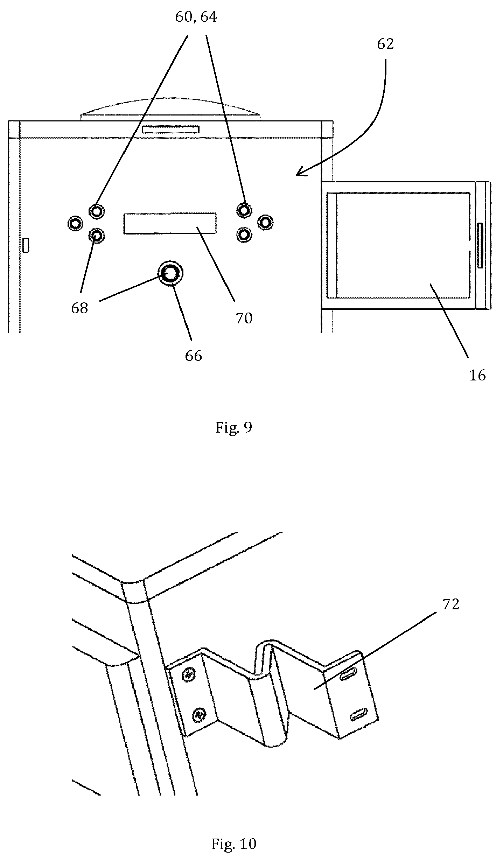

Figure 9 shows a side view of a local control panel 62 with an open door 16. It comprises local input means 60, realized as control buttons 64, and the power button 66. The local output means 70 is arranged in the center, and realized as an LCD display. The control buttons 64 and the power button 66 comprise LEDs 68 for illumination, allowing the user easy configuration also during the night or in low light environments. The door 16 is sealed in order to avoid that LCD display or buttons are damaged by a liquid.
All relevant settings as amount of feeds, amount of water, dispensing times, as well as a real time clock can be configured in the local control panel 62. All these data can be shown in the LCD display. Furthermore, in the local control panel, the user can configure the network settings and the Wi-Fi password, visualize if the machine is connected to the internet and visualize the IP address of the machine.

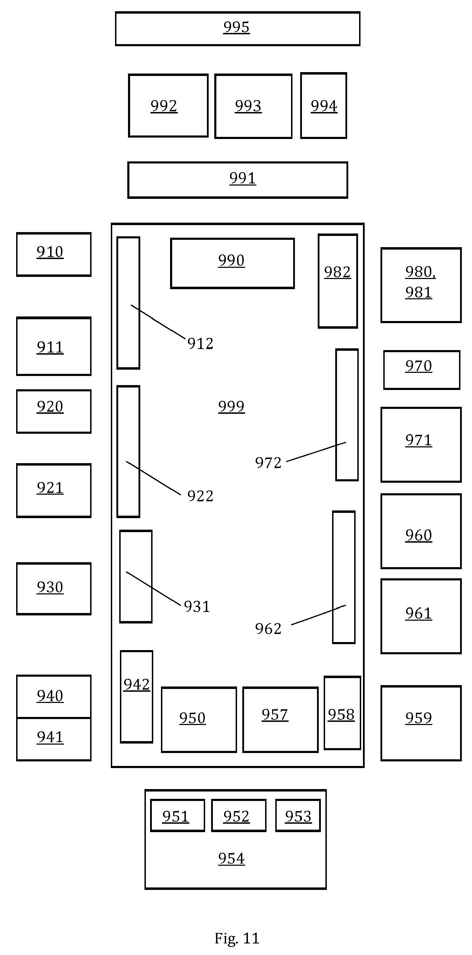

Figure 10 shows a diagonal view of a detail of the body of the feeding system 10 with external support elements 72. If desired, the user can attach the feeding system 10 to a wall. Figure 11 shows the block diagram of a feeding system 10. The central processing unit 999 of the control device comprises a motor control 912, a valve control 922, a level control 931, an external storage 942, the control panel control 950, power management 957, the power supply 958, the DC-DC converter control 962, the battery charger 972, the camera control 982 and the Wi-Fi, web-server, TCP-IP control 990. The motor 910 and the current and voltage measurement 911 are assigned to the motor control 912. The motor speed and torque are controlled in real time through its voltage and current measurement 911. The electronic valve 920 and the water flow sensor 921 are assigned to the valve control 922.
The infrared feeds and water sensors 930 are assigned to the level control 931. The non-volatile memory 940 and the web-server user settings 941 are assigned to the external storage 942. The control panel controls 950 are connected to the local control panel 954 comprising buttons 951, the display 952 and LEDs 953.
The AC Power 959 is connected to the power management 957 and the power supply 958. The DC-DC converter 960 and the associated current and voltage measurement 961 are assigned to the DC-DC Converter Control 962. The embedded highly efficient DC-DC converter 960 allows the machine to minimize power consumption and, thus, to be environmentally friendly. The control of the DC-DC converter is done through its voltage current measurement 961. The battery 970 and the associated current and voltage measurement 971 are assigned to the battery charger 972. A camera 980 and the infrared sensor 981 are assigned to the camera control 982. The Wi-Fi, web-server, TCP-IP control 990 is connected to the Wi-Fi Adapter 991 which can wirelessly be connected to e-mail notification functions 992, web-browsers 993 or an app 994.
This is, the Wi-Fi adapter physically connects the TCP/IP communication protocol with the web server and the web client browser 993 or App 994. The control and remote monitoring of the machine is done through HTTP protocol. These functions can be accessed by a remote device 995 which can for example be a PC, a laptop a tablet or a smartphone and by which the user can monitor the remaining amounts in the storage container 44 and in the water reservoir 48 and the feeds and water pots 22. Additionally, the user can see and hear the pet and communicate with it via speakers arranged on the system. Based on this information, the user can then freely choose the dispensing times and amounts and remotely initiate the feeding.

**List of reference signs**

| | |
|---|---|
| feeding system | 10 |
| lid | 12 |
| transparent part of the lid | 14 |
| door | 16 |
| feeds output | 18 |
| water output | 20 |
| feeds and water pots | 22 |
| camera | 24 |
| rubber seal | 26 |
| nutrients dispensing means | 30 |
| motor | 32 |
| dispensing unit | 34 |
| electronic valve | 36 |
| water inlet | 37 |
| AC power adapter | 38 |
| sensor | 40 |
| storage sensing device | 42 |
| storage container | 44 |
| nutrients | 46 |
| water reservoir | 48 |
| connecting means | 50 |
| coupling element | 52 |
| locking mechanism | 54 |
| local input means | 60 |
| local control panel | 62 |
| control buttons | 64 |
| power button | 66 |
| LEDs | 68 |
| local output means | 70 |
| external support elements | 72 |
| motor | 910 |
| current and voltage measurement | 911 |
| motor control | 912 |
| electronic valve | 920 |
| water flow sensor | 921 |
| valve control | 922 |
| infrared feeds and water sensors | 930 |
| level control | 931 |
| non-volatile memory | 940 |
| web-server user settings | 941 |
| external storage | 942 |
| control panel control | 950 |
| buttons | 951 |
| display | 952 |
| LEDs | 953 |
| local control panel | 954 |
| power management | 957 |
| power supply | 958 |
| AC power | 959 |
| DC-DC converter | 960 |
| current and voltage measurement | 961 |
| DC-DC converter control | 962 |
| battery | 970 |
| current and voltage measurement | 971 |
| battery charger | 972 |
| camera | 980 |
| infrared sensor | 981 |
| camera control | 982 |
| Wi-Fi, web-server, TCP-IP control | 990 |
| Wi-Fi adapter | 991 |
| e-mail notification | 992 |
| web browser | 993 |
| app | 994 |
| remote device | 995 |
| central processing unit of the control device | 999 |

## Claims

1. Feeding system (10) for remotely controllable dispensing of nutrients (46) for a living being, in particular for an animal, comprising
- a nutrients dispensing means (30),
- a control device for controlling and/ or monitoring the dispensing of nutrients (46) and/ or the living being,
- a storage container (44) for nutrients (46) with a storage sensing device (42) as a part of the control device,
wherein the control device is connected or connectable to a data transmission network, in particular to the internet, so that a user can remotely control the dispensing of nutrients (46) and/ or monitor the living being and/ or the remaining nutrients (46) by means of the control device and the data transmission network.

2. Feeding system (10) for remotely controllable dispensing of nutrients (46) according to claim 1, wherein the feeding system (10) is adapted to dispense solid and/ or paste-like feeds and/ or liquids, particularly water.

3. Feeding system (10) for remotely controllable dispensing of nutrients (46) according to at least one of the preceding claims, wherein the control device is adapted to send information about the amount of nutrients (46) consumed and/ or about the remaining amount of nutrients (46).

4. Feeding system (10) for remotely controllable dispensing of nutrients (46) according to at least one of the preceding claims, wherein the control device comprises an internal embedded web server (990).

5. Feeding system (10) for remotely controllable dispensing of nutrients (46) according to at least one of the preceding claims, wherein the nutrients dispensing means (30) is realized as a screw conveyor which is part of a waterproof dispensing unit (34), furthermore comprising a motor (32) and a gear box.

6. Feeding system (10) for remotely controllable dispensing of nutrients (46) according to at least one of the preceding claims, wherein the control device comprises a camera (24) and/ or at least one sensor (40).

7. Feeding system (10) for remotely controllable dispensing of nutrients (46) according to at least one of the preceding claims, wherein the control device for controlling and/ or monitoring the dispensing of the nutrients comprises a closed-loop control.

8. Feeding system (10) for remotely controllable dispensing of nutrients (46) according to at least one of the preceding claims, wherein the storage container (44) comprises a connecting means (50) suitable to establish a connection to a water source.

9. Feeding system (10) for remotely controllable dispensing of nutrients (46) according to claim 8, wherein the connecting means (50) comprises a coupling element (52) suitable to establish a sealing contact with a corresponding coupling element.

10. Feeding system (10) for remotely controllable dispensing of nutrients (46) according to at least one of the preceding claims, wherein the control device comprises an optical sensor (40), particularly realized as a camera (24), suitable to transmit evaluable image data in dark surroundings.

11. Feeding system (10) for remotely controllable dispensing of nutrients (46) according to at least one of the preceding claims, wherein the feeding system (10) comprises an electrical storage device, particularly a battery and an energy management system for energy consumption reduction.

12. Feeding system (10) for remotely controllable dispensing of nutrients (46) according to at least one of the preceding claims, wherein the control device comprises a local input means (60) that allows for entering control data directly into the control device and which is real-time synchronized to the remote control.

13. Feeding system (10) for remotely controllable dispensing of nutrients (46) according to at least one of the preceding claims, wherein the control device comprises a local output means (70) that allows for displaying data at the place of feeding.

14. Feeding method for remotely controllable dispensing of nutrients (46) for a living being, in particular for an animal, comprising the steps:
- providing a feeding system (10) according to at least one of the claims 1 to 13,
- connecting the control device to a data transmission network, in particular to the internet,
- remotely controlling the dispensing of nutrients (46) and/ or monitoring the living being and/ or the remaining nutrients (46) by means of the control device and the data transmission network.

15. Computer program, particularly app, which can be loaded into the internal memory of a digital computer and which comprises sections of software code that are able to execute functions of the feeding system (10) according to at least one of the claims 1-13 or that are able to execute steps, particularly all steps, of the feeding method according to claim 14.

## Amended claims

### Amended claims in accordance with Rule 137(2) EPC.

1. Feeding system (10) for remotely controllable dispensing of nutrients (46) for a living being, in particular for an animal, comprising
- a nutrients dispensing means (30),
- a control device for controlling and/ or monitoring the dispensing of nutrients (46) and/ or the living being,
- a storage container (44) for nutrients (46) with a storage sensing device (42) as a part of the control device,
wherein the control device is connected or connectable to a data transmission network, in particular to the internet, so that a user can remotely control the dispensing of nutrients (46) and/ or monitor the living being and/ or the remaining nutrients (46) by means of the control device and the data transmission network, **characterized in that** the control device comprises an optical sensor (40), particularly realized as a camera (24), suitable to transmit evaluable image data in dark surroundings.

2. Feeding system (10) for remotely controllable dispensing of nutrients (46) according to claim 1, wherein the feeding system (10) is adapted to dispense solid and/ or paste-like feeds and/ or liquids, particularly water.

3. Feeding system (10) for remotely controllable dispensing of nutrients (46) according to at least one of the preceding claims, wherein the control device is adapted to send information about the amount of nutrients (46) consumed and/ or about the remaining amount of nutrients (46).

4. Feeding system (10) for remotely controllable dispensing of nutrients (46) according to at least one of the preceding claims, wherein the control device comprises an internal embedded web server (990).

5. Feeding system (10) for remotely controllable dispensing of nutrients (46) according to at least one of the preceding claims, wherein the nutrients dispensing means (30) is realized as a screw conveyor which is part of a waterproof dispensing unit (34), furthermore comprising a motor (32) and a gear box.

6. Feeding system (10) for remotely controllable dispensing of nutrients (46) according to at least one of the preceding claims, wherein the control device comprises a camera (24) and/ or at least one sensor (40).

7. Feeding system (10) for remotely controllable dispensing of nutrients (46) according to at least one of the preceding claims, wherein the control device for controlling and/ or monitoring the dispensing of the nutrients comprises a closed-loop control.

8. Feeding system (10) for remotely controllable dispensing of nutrients (46) according to at least one of the preceding claims, wherein the storage container (44) comprises a connecting means (50) suitable to establish a connection to a water source.

9. Feeding system (10) for remotely controllable dispensing of nutrients (46) according to claim 8, wherein the connecting means (50) comprises a coupling element (52) suitable to establish a sealing contact with a corresponding coupling element.

10. Feeding system (10) for remotely controllable dispensing of nutrients (46) according to at least one of the preceding claims, wherein the feeding system (10) comprises an electrical storage device, particularly a battery and an energy management system for energy consumption reduction.

11. Feeding system (10) for remotely controllable dispensing of nutrients (46) according to at least one of the preceding claims, wherein the control device comprises a local input means (60) that allows for entering control data directly into the control device and which is real-time synchronized to the remote control.

12. Feeding system (10) for remotely controllable dispensing of nutrients (46) according to at least one of the preceding claims, wherein the control device comprises a local output means (70) that allows for displaying data at the place of feeding.

13. Feeding method for remotely controllable dispensing of nutrients (46) for a living being, in particular for an animal, comprising the steps:
- providing a feeding system (10) according to at least one of the claims 1 to 12,
- connecting the control device to a data transmission network, in particular to the internet,
- remotely controlling the dispensing of nutrients (46) and/ or monitoring the living being and/ or the remaining nutrients (46) by means of the control device and the data transmission network.

14. Computer program, particularly app, which can be loaded into the internal memory of a digital computer and which comprises sections of software code that are able to execute functions of the feeding system (10) according to at least one of the claims 1 - 12 or that are able to execute steps, particularly all steps, of the feeding method according to claim 13.
